(19)

**Europäisches Patentamt**
**European Patent Office**
**Office européen des brevets**

(11) **EP 2 583 764 A2**

(12) **EUROPÄISCHE PATENTANMELDUNG**

(43) Veröffentlichungstag:
**24.04.2013 Patentblatt 2013/17**

(51) Int Cl.:
***B21C 37/06*** (2006.01)   ***B21C 51/00*** (2006.01)

(21) Anmeldenummer: **12075085.6**

(22) Anmeldetag: **09.07.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **03.08.2011 DE 102011109511**

(71) Anmelder: **Salzgitter Mannesmann Präzisrohr GmbH**
**59067 Hamm (DE)**

(72) Erfinder:
• **Weingarten, Willi**
**47447 Moers (DE)**
• **Herrmann, Siegfried**
**57076 Siegen (DE)**

(74) Vertreter: **Meissner, Peter E.**
**Meissner & Meissner**
**Patentanwaltsbüro**
**Hohenzollerndamm 89**
**14199 Berlin (DE)**

(54) **Verfahren zur Steuerung einer Produktionsanlage mittels einer hochauflösenden Ortverfolgung von Werkstücken**

(57)    Die Erfindung betrifft ein Verfahren zur Steuerung einer Produktionsanlage mit einer hochauflösenden Ortsverfolgung von Werkstücken, bei dem im Zuge der Fertigung mittels an verschiedenen Positionen der Produktionsanlage angeordneten Positionssensoren mit dazwischen geschalteten Wegmesssensoren einerseits die aktuelle Position (Werkstoffanfang, Werkstoffende) des durch die Produktionsanlage laufenden Werkstückes physikalisch durch die Sensoren bestimmt wird und andererseits an einer Stelle der Produktionsanlage mittels Kombination von mindestens zwei Positionssensoren und mindestens einem dazwischen geschalteten Wegmesssensor oder mindestens zwei Wegmesssensoren und mindestens einem dazwischen geschalteten Positionssensor eine Längenmessung des Werkstückes erfolgt.

Die physikalisch ermittelten Positionen an den verschiedenen Positionssensoren werden dann mit einer aus den gewonnenen Messdaten errechneten Soll-Position des Werkstückes verglichen und bei Überschreitung von Abweichungsgrenzwerten erfolgt eine Anzeige und/oder ein Prüfabbruch und/oder ein Stillsetzen der Produktionsanlage.

**Figur 1a**: Prinzip der Ortsverfolgung beim Durchlauf eines Rohres durch die Prüfanlage (kurzes Rohr)

EP 2 583 764 A2

**(Forts. nächste Seite)**

**Figur 1b**: Prinzip der Ortsverfolgung beim Durchlauf eines Rohres durch die Prüfanlage (langes Rohr)

**Beschreibung**

Die Erfindung betrifft ein Verfahren zur Steuerung einer Produktionsanlage mittels einer hochauflösenden Ortsverfolgung von Werkstücken, insbesondere von Rohren aus Stahl, gemäß dem Oberbegriff des Patentanspruches 1.

Wenngleich im Folgenden beispielhaft auf die Problematik der Steuerung einer Prüfanlage von Rohren mittels einer Ortsverfolgung durch eine möglichst genaue Positions- und Längenbestimmung eingegangen wird, betrifft dieses Problem grundsätzlich alle Produktionsanlagen, wie beispielsweise Fertigungs- oder Prüfanlagen in denen im Produktionsfluss exakte Aussagen über die jeweilige Position des Werk- bzw. Prüfstücks getroffen werden müssen. Dies können neben Rohren, z. B. auch Stangen, Bleche oder beliebig andere durch die Produktionsanlage zu transportierende Produkte sein.

In vielen hochautomatisierten Produktionsbereichen müssen Vor- und Fertigprodukte gleichzeitig sehr schnell und positionsgenau transportiert werden. So werden z. B. bei der Herstellung von Präzisrohren die Rohre nacheinander in einer Prüfanlage mit verschiedenen Prüfsystemen auf Fehlerfreiheit und Einhaltung der Kundenspezifikationen geprüft. Hohe Prüfgeschwindigkeiten bis zu mehreren Metern pro Sekunde, lückenlose Prüfung und die Notwendigkeit millimetergenauer Lokalisierung von Fehlern erfordern ein echtzeitfähiges Steuerungssystem mit Reaktionszeiten im Bereich einiger 100μs. Eine Anlage zur zerstörungsfreien Prüfung von Rohren oder Stangen ist z. B. aus der DE 30 10 360 A1 bekannt.

Zur Steuerung der Prüfanlage, d. h. für den ordnungsgemäßen Durchlauf der Rohre durch die Anlage, ist es zwingend erforderlich, jederzeit genaue Kenntnis über die aktuelle Position der Rohranfänge bzw. der Rohrenden aller in der Anlage befindlichen Rohre zu besitzen. Nur so ist neben einer genauen Rohrlängenmessung auch eine genaue Ein- bzw. Ausblendung der Prüfgeräte möglich. Um dies zu erreichen, ist der Einsatz von "Ortsverfolgungskomponenten" wie den Rohranfang bzw. das Rohrende erkennende Positionssensoren (z. B. Lichtschranken) und Wegmesssensoren (z. B. Impulsgeber oder berührungslos arbeitende Wegverfolgungssensoren) erforderlich, die an verschiedenen Stellen im Fertigungsfluss der Prüfstrecke angeordnet sind. Mittels einer entsprechenden Anzahl von Positionssensoren wird das durch die Prüfanlage durchlaufende Rohr ortsgenau verfolgt und mit den Impulsgebern die jeweils zurückgelegte Durchlaufstrecke des Rohres durch die Anlage ermittelt.

An den Rohrtransportbändern bzw. Antrieben messen fest angebrachte bzw. dynamisch während des Durchlaufs der Rohre anstellbare Impulsgeber die Bewegung des Transportbandes oder des darauf befindlichen Rohres. Die fest angebrachten Impulsgeber sind dabei mit dem Antrieb einer Treiberrolle verbunden, wobei die Treiberrolle kraftschlüssig auf das Transportband bzw. Rohr aufgesetzt und wieder hiervon abgehoben werden kann. Dynamisch aufgesetzte Impulsgeber werden während des Objektdurchlaufs von der Anlagensteuerung gezielt auf das Rohr aufgesetzt bzw. abgehoben und bieten den Vorteil schlupffreier Ortskoordinatenerfassung.

Aus den gewonnenen Daten lassen sich sowohl die Längen der aktuell durch die Anlage laufenden Rohre wie auch deren jeweilige Ortsposition ermitteln und damit die Prüfanlage entsprechend steuern.

In der Praxis zeigt sich jedoch immer wieder, wie schwierig die Überwachung komplexer voneinander abhängiger Sensorsysteme im laufenden Betrieb und damit eine exakte Steuerung von Prüfanlagen ist.

Von der Genauigkeit der Rohrverfolgung wird z. B. das Anstellen/Öffnen von Rollgangselementen abhängig gemacht. Fehler bei der Rohrpositionierung können dabei zur Beschädigung der Rohre, der Transporteinrichtungen bzw. der Prüfmechaniken führen. Des Weiteren wird von der aktuellen Rohrposition das Aktivieren/Deaktivieren der einzelnen Prüffunktionen ausgelöst.

Wünschenswert ist es, dass eine möglichst vollständige Prüfung über die gesamte Rohrlänge erfolgt, wobei dieser aber technische Grenzen gesetzt sind, so dass die anfallenden ungeprüften und damit nicht normgerechten Rohrenden in der Regel abgeschnitten und verschrottet werden müssen. Bei einer guten Ortsgenauigkeit kann der Anteil ungeprüfter Rohrenden jedoch auf wenige Millimeter der Rohrlänge begrenzt und damit das Ausbringen und die Wirtschaftlichkeit deutlich gesteigert werden.

Bislang ist es üblich, an einer Stelle der Prüfanlage die Länge des aktuell durchlaufenden Rohres zu bestimmen und den ermittelten Wert als konstant für den Durchlauf durch die Prüfanlage anzusetzen. Die Längenmessung wird meist schon im Einlaufbereich der Prüfanlage vorgenommen, um möglichst frühzeitig eine Aussage zur Länge des zu prüfenden Rohres zu erhalten.

Die Messung wird beispielsweise mit zwei Lichtschranken und einem dazwischen geschalteten Impulsgeber vorgenommen. Passiert der Rohranfang eine Lichtschranke, wird gleichzeitig der Impulsgeber aktiviert, der die Wegimpulse zählt. Die Messung endet, wenn das Rohrende die andere Lichtschranke passiert. Hieraus lässt sich dann die Rohrlänge mittels folgender Formel errechnen:

Rohrlänge = Anzahl der Wegimpulse x Auflösung des Impulsgebers + Abstand zwischen den Lichtschranken

Eine Längenmessung ist aber auch grundsätzlich mittels zweier Impulsgeber und einer dazwischen geschalteten Lichtschranke durchführbar, wenngleich das Umschalten der Impulsgeber während der laufenden Messung nicht unkritisch ist und deshalb nur in Ausnahmefällen Anwendung findet.

Bei der Positionsverfolgung und der Längenmessung der Werkstücke gibt es diverse auf die Ortsverfolgungskomponente einwirkende Fehlerquellen, die die Messergebnisse verfälschen und damit zu Fehlinterpretationen über den Anlagenzustand und die durchlaufenden Rohre bzw. deren Positionen in der Anlage führen.

Zu nennen sind hier z. B.:

- der Auflösungsfaktor des Impulsgebers, der bei einer Messstrecke von z. B. 15 m und einem Auflösungsfaktorfehler von z. B. 0,1% einen Messfehler von 15 mm ergibt,

- Schlupf der Treiberrollen der Impulsgeber auf der Transportband- oder Rohroberfläche,

- Verschleiß der Treiberrollen, d. h. Durchmesser- und damit Drehzahlveränderung,

- falsches, zeitversetztes Aufsetzen/Abheben der Impulsgeber,

- Schaltzeit der Lichtschranken, hier hat die Messung z. B. bei einer Rohrgeschwindigkeit von 3 m/s und einer Schaltzeitschwankung von 333 $\mu$s einen Wegfehler von 1 mm zur Folge,

- defekte oder fehlkalibrierte Lichtschranken,

- Ausrichtung der Lichtschranken, z. B. wenn diese nicht exakt rechtwinklig zur Rohrachse ausgerichtet sind, ergeben sich unterschiedliche Messungen in Abhängigkeit vom Rohrdurchmesser,

- Schaltzeitverzögerungen der Schaltelemente, z. B. beim Einsatz von Optokopplern.

Da die Rohrlänge sich von Rohr zu Rohr ändern kann und damit auch die Anzahl und Anordnung der für die Rohrverfolgung aktiven Sensoren, ist es mit bekannten Verfahren nur sehr schwer möglich, Fehlpositionierungen bzw. die hierfür verantwortlichen Sensoren (z. B. Lichtschranken, Impulsgeber) innerhalb der Prüfstrecke zu erkennen. Die Erkennung von Positionierfehlern bzw. die Suche des verantwortlichen Sensors im laufenden Betrieb ist daher sehr mühsam und zeitaufwändig. Nach dem Auffinden des Sensors ist eine aufwändige händische Neukalibrierung der fehlerbehafteten Sensoren notwendig.

Die zu lösende Hauptaufgabe der Erfindung besteht darin, ein verbessertes Verfahren zur Steuerung einer Produktionsanlage von Werkstücken, insbesondere einer Prüfanlage für Rohre anzugeben, mit der durch genauere Ortsverfolgung eine exaktere Steuerung der Anlage und eine Qualitätsverbesserung durch Reduzierung der ungeprüften Endbereiche der zu prüfenden Rohre erreicht wird. Weiterhin sollen durch fehlerhafte Ortsinformationen aufgrund defekter oder fehlkalibrierter Sensoren hervorgerufene Falschaussagen bei der Prüfung der Werkstücke (Rohre) verringert werden.

Eine weitere Aufgabe besteht darin, ein Frühwarnsystem zu schaffen, um fehlerhafte bzw. falsch kalibrierte Sensoren zu erkennen und eine Selbstüberwachung mit Eigenkalibrierung der Sensorkomponenten zu realisieren.

Erfindungsgemäß wird die Hauptaufgabe dadurch gelöst, dass die physikalisch ermittelten Positionen an den verschiedenen Positionssensoren mit einer aus den gewonnenen Messdaten errechneten Soll-Position des Werkstückes (Rohres) verglichen werden und bei Überschreitung von Abweichungsgrenzwerten eine Anzeige und/oder ein Prüfabbruch und/oder ein Stillsetzen der Produktionsanlage erfolgt.

Hierzu wird im Einlaufbereich der Prüfstrecke die Werkstücklänge z. B. mit 2 Positionssensoren und einem Wegmesssensor gemessen und daraus rechnerisch die Soll-Länge des Werkstückes bzw. Rohres ermittelt. Als Positionssensoren können z. B. Lichtschranken und als Wegmesssensoren Impulsgeber eingesetzt werden. Bezogen auf diesen rechnerisch ermittelten Längenwert werden dann die Messwerte aller anderen möglichen Kombinationen zur Längenmessung verglichen und bewertet.

Im Unterschied zum bekannten Stand der Technik, bei dem nur die physikalisch beispielsweise über Lichtschranken und Impulsgeber ermittelten (Ist-) Positionen zur Steuerung der Anlage genutzt werden, findet bei dem erfindungsgemäßen Verfahren ein Abgleich mit einer rechnerisch ermittelten Position statt, mit der durch eine Grenzwertbetrachtung und Redundanzberücksichtigung eine wesentlich genauere Ortsverfolgung des durch die Produktionsanlage laufenden Werkstückes (Rohres) und damit eine genauere Steuerung der Anlage ermöglicht wird. Zudem werden Falschaussagen aufgrund von fehlerhaften oder fehlkalibrierten Sensoren damit deutlich verringert.

Die genauere Ortsverfolgung führt außerdem zu einer exakteren Prüfung über die Werkstücklänge, so dass ungeprüfte Werkstückenden und damit Ausbringungsverluste durch Abtrennen ungeprüfter Werkstückenden deutlich verringert werden.

In einer vorteilhaften Ausgestaltung der Erfindung werden die ermittelten Abweichungen für eine Vielzahl bereits durch die Produktionsanlage gelaufener Werkstücke erfasst, um damit Langzeittrends erkennen zu können. Vorteilhaft werden diese Daten auf einem Bildschirm visualisiert und für spätere Auswertungen entsprechend abgespeichert.

Zur weiteren Verbesserung der Ortsverfolgung der Werkstücke (Rohre) erfolgt die Längenmessung redundant mit den an mehreren Stellen der Produktionsanlage angeordneten Lichtschranken und Wegmessgebern, wobei die ermittelten Messwerte mit Abweichungsgrenzwerten verglichen und die Abweichungen den an der Messung jeweils beteiligten Lichtschranken und Wegmessgebern zugeordnet werden. Hieraus können vorteilhaft Rückschlüsse auf die jeweils fehlerhaft arbeitenden Sensoren gezogen und Abhilfemaßnahmen eingeleitet werden. Hierbei werden während des Durchlaufs der Werkstücke durch die Produktionsanlage alle für die aktuelle Werkstücklänge möglichen Kombinationen von Längenmessungen unter Benutzung zweier Positionssensoren und einem zwischenliegenden Impulsgeber oder zwei Wegmesssensoren und einem dazwischen geschalteten Positionssensor so benutzt, dass redundante Ergebnisse entstehen. Die Abweichungen dieser redundanten Ergebnisse werden zu einem Gütekriterium verarbeitet und gleichzeitig mit einer intern ermittelten erwarteten Position verglichen. Überschreitungen von Abweichungsgrenzwerten führen dann zu einer Anzeige und/oder einem Prüfabbruch und/oder einem Stillsetzen der Anlage.

In weiteren vorteilhaften Ausgestaltungen der Erfindung wird mittels der den Positionssensoren und/oder Wegmesssensoren zugeordneten Grenzwertüberschreitungen eine Stellgröße ermittelt und damit eine Nachkalibrierung der entsprechenden Sensoren vorgenommen. Die Nachkalibrierung der Sensoren erfolgt vorteilhaft automatisiert, wodurch Anlagenstillstände vermieden und das Ausbringen und damit die Produktivität deutlich gesteigert werden.

Die ermittelten Messwerte und die Abweichungen von Grenzwerten werden nach einer weiteren Ausgestaltung der Erfindung einer optischen Anzeigeeinheit zugeführt, so dass Abweichungen und Trends visuell sehr schnell erkennbar sind.

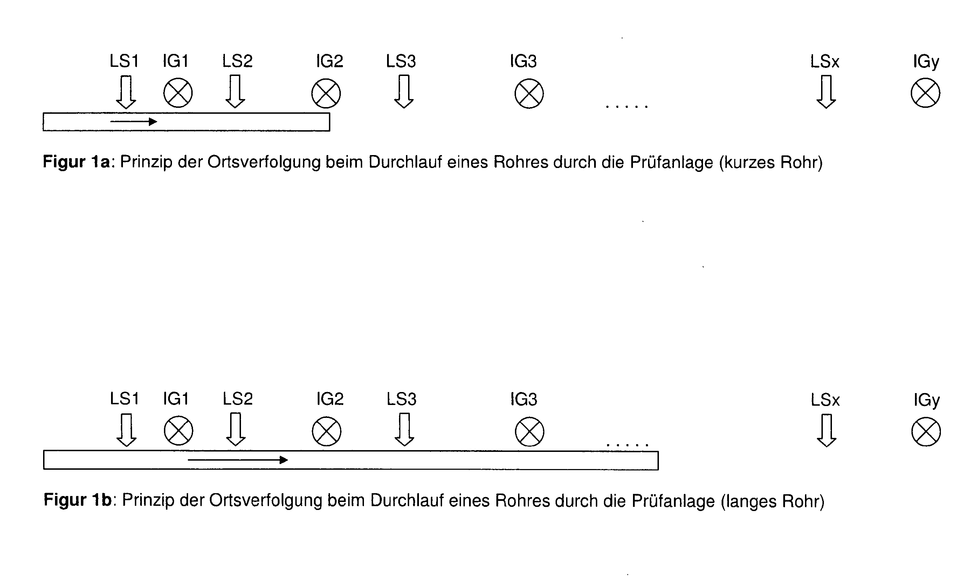

Eine Rohrprüfanlage, die mittels der erfindungsgemäßen hochauflösenden Ortsverfolgung gesteuert wird, ist den schematischen Darstellungen der **Figuren 1a und 1b** für ein kurzes bzw. langes Rohr zu entnehmen.

Für den ordnungsgemäßen Durchlauf der Rohre durch die Anlage ist es zwingend erforderlich, jederzeit genaue Kenntnis über die aktuelle Position der Rohrenden aller in der Anlage befindlichen Rohre zu erhalten. Nur so ist neben einer genauen Rohrlängenmessung auch eine genaue Ein- bzw. Ausblendung der Prüfgeräte möglich.

Um dieses Ziel zu erreichen, ist der Einsatz sogenannter "Ortsverfolgungskomponenten" erforderlich. Mit einer entsprechenden Anzahl von Lichtschranken wird das durch die Anlage laufende Rohr verfolgt. Die Lichtschranken sind mit "LS ..." und die Impulsgeber mit "IG ..." gekennzeichnet.

Mit Hilfe der Impulsgeber IG1 bis IGy wird der Durchlauf des Rohres durch die Anlage verfolgt. Dabei können die Impulsgeber entweder fest mit Bändern oder Antrieben verbunden sein oder anstellbar an das Rohr angekoppelt werden. Bei festen Impulsgebern ist die Zuordnung der Treibergeschwindigkeit mit der Rohrgeschwindigkeit aufgrund möglichen Schlupfes nicht zwingend identisch. Da die Antriebsrollen als kraftschlüssiger Antrieb mit der Zeit verschleißen, ändert sich zeitabhängig auch der Durchmesser der Antriebsrolle und damit der Umrechnungsfaktor für die Bestimmung der Position. Anstellbare Impulsgeber bieten hohe Messgenauigkeit, da sie direkt auf die Rohroberfläche ankoppeln. Voraussetzung für eine hohe Messgenauigkeit ist allerdings, dass die Impulsgeber erst dann aktiviert werden, wenn sie sicher aufgesetzt haben und schlupffrei mit dem Rohr mitlaufen. Das Aufsetzen bzw. Abheben dieser Impulsgeber wird über Signale der Lichtschranken gesteuert.

Die Längenmessung findet gemäß **Figur 1** vorteilhaft über zwei Lichtschranken und einen dazwischen liegenden Impulsgeber statt. Das Rohr läuft mit dem Rohranfang zuerst an der ersten Lichtschranke LS1 vorbei. Nach Erreichen der Position des Impulsgebers IG1 wird dieser angestellt und aktiviert. Belegt der Rohranfang die nächste Lichtschranke LS2, so wird der Längenmessvorgang gestartet und die Pulse des Impulsgebers so lange gezählt, bis das Rohrende die erste Lichtschranke LS1 wieder frei gibt. Die ermittelte Rohrlänge ergibt sich dann aus den gezählten Impulsen und dem Abstand der beiden Lichtschranken zueinander. Eine gleichartige Längenmessung ist auch über jedes Lichtschrankenpaar möglich, dass einen Impulsgeber einschließt und dessen Abstand kleiner als die aktuelle Rohrlänge ist.

Die Messgenauigkeit dieser Messung hängt im Wesentlichen von drei Faktoren ab:

- Genauigkeit des Impulsgebers,

- Abstand der beiden Lichtschranken (optisch),

- Schaltzeiten der beiden Lichtschranken.

Die Schaltzeiten der Lichtschranken sind intern kalibriert, die Genauigkeit des Impulsgebers bzw. die einzustellende Längenkorrektur (gleich Abweichung des gemessenen physikalischen Abstandes der beiden Lichtschranken vom optisch aktiven Abstand) stellen ein Gleichungssystem mit zwei voneinander unabhängigen Unbekannten dar. Zur Kalibrierung ist daher eine Messreihe mit Rohren unterschiedlicher Länge bei gleichbleibender Durchlaufgeschwindigkeit erforderlich. Aus dieser Messreihe lassen sich dann die Längenkorrektur und der Korrekturfaktor für den Impulsgeber bestimmen. Insbesondere der Korrekturfaktor ist hierbei eine extrem sensible Einstellgröße, die von der zu prüfenden Rohrlänge abhängig ist.

Der Vergleich von einem kurzen z. B. 5 m langen Rohr gemäß **Figur 1a** und einem z. B. 15 m langen Rohr gemäß **Figur 1b** verdeutlicht die Sensibilität für den Korrekturfaktor. Der Abstand der Lichtschranken LS1 und LS2 beträgt z. B. 2 m.

Zwischen dem Belegen der zweiten Lichtschranke LS2 und dem Freiwerden der ersten Lichtschranke LS1 muss der Impulsgeber IG1 13 m Rohr "zählen". Um hier eine Auflösung von z. B. 1 mm zu erreichen muss die Genauigkeit des Impulsgebers besser als 1/13000, das entspricht ca. 0,07 Promille, sein. Dies zeigt die erforderliche Sorgfalt bei der Bestimmung des Korrekturfaktors und die häufige Nachkalibrierung der Korrekturfaktoren. Änderungen in der 3. oder 4. Nachkommastelle des Korrekturfaktors haben bereits große Auswirkungen auf die Messgenauigkeit.

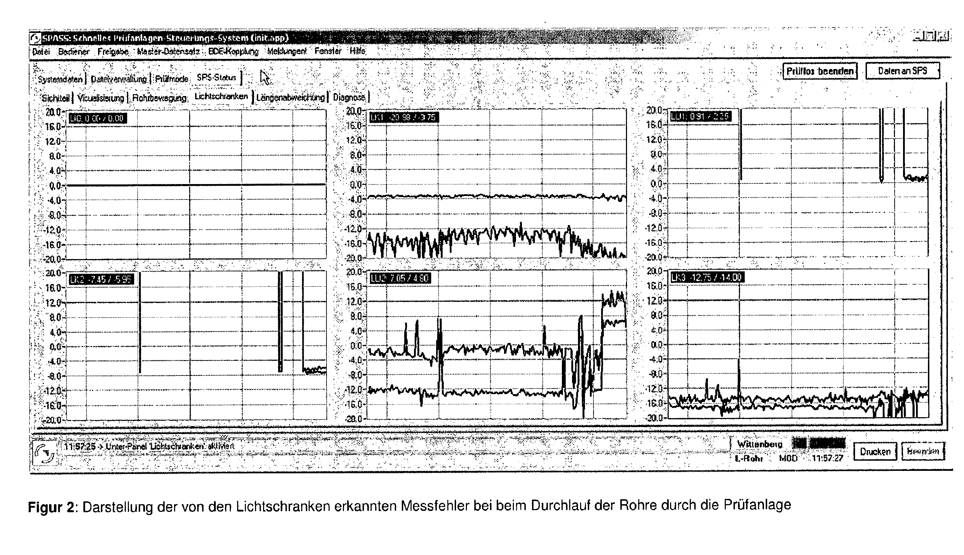

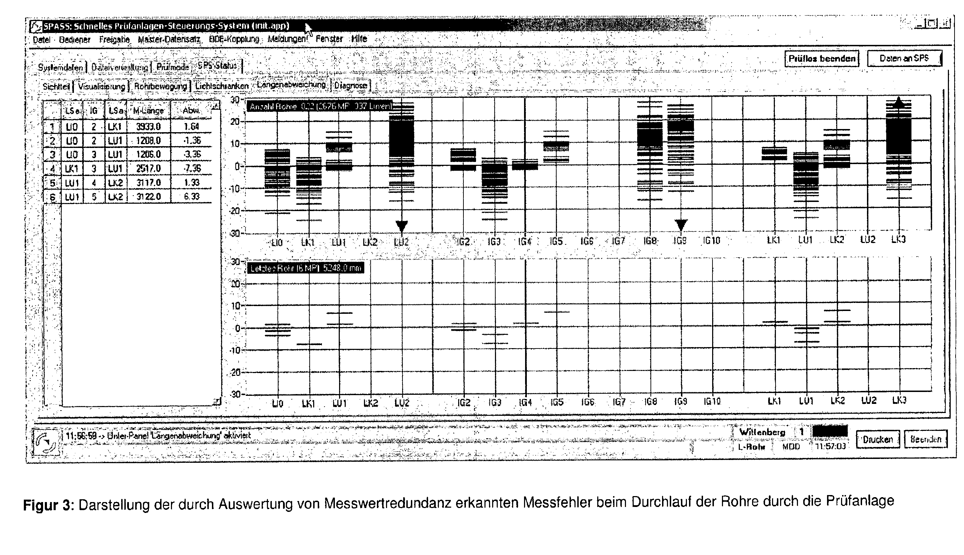

Die aus den Messwerten ermittelten Positionsabweichungen sind für die Lichtschranken in **Figur 2** und für die Längenabweichungen in **Figur 3** dargestellt.

In **Figur 2** wird mit sechs Grafiken die Genauigkeit der Ortsverfolgung für die durch die Anlage transportierten Rohre dargestellt. Jede der sechs Grafiken beschreibt die erkannten Genauigkeitsabweichungen am Ort einer Lichtschranke in diesem Beispiel mit LI0, LK1, LU1, LK2, LU2 und LK3 bezeichnet.

Da die mechanischen Positionen dieser Lichtschranken dem System bekannt sind und das "Freiwerden" bzw. "Belegtwerden" dieser Lichtschranken während des Rohrdurchlaufs ebenfalls erkannt werden, kann bei jedem Zustandswechsel an einer der Lichtschranken die bekannte Position der Lichtschranke mit der angenommenen Position des durchlaufenden Rohres verglichen werden. Die Abweichung zwischen angenommener Position und Lichtschrankenposition ist der Fehler des Rohrverfolgungssystems. Zu jeder Lichtschranke ist dieser Wert sowohl für den einlaufenden Rohranfang als auch für das auslaufende Rohrende bestimmbar. Beide Werte werden jeweils in die Grafik eingetragen.

Die erste Lichtschranke (hier LI0) dient als Bezugspunkt für die Ortsverfolgung; demzufolge sind hier die Abweichungen stets 0. Bei den anderen Lichtschranken werden für jedes Rohr immer dann Werte in die Grafik übernommen, wenn eine Lücke zwischen den beiden aufeinander folgenden Rohren erkannt wird. Wird eine Lichtschranke im "Stoss-an-Stoss"-Betrieb passiert (vergl. Grafiken der Lichtschranken LU1 bzw. LK2 in Figur 2), so werden auch keine Abweichungen erkannt und daher auch nicht visualisiert.

Für das letzte durch die Anlage gelaufene Rohr stehen zusätzlich die Abweichungen in numerischer Form jeweils in der linken oberen Ecke der Grafik. Dargestellt werden scrollend z. B. die letzten 200 Rohre. Eine zusätzliche Protokollierung der ermittelten Abweichungen in Log-Dateien ermöglicht zusätzliche kundenseitige weitergehende Auswertungen der Transportabweichungen.

In **Figur 3** wird in zwei Grafiken unter Benutzung der redundanten Möglichkeiten der Rohrlängenmessung die Genauigkeit der Lichtschranken bzw. Impulsgeber dargestellt. Zur Messung einer Länge ist entweder die Kombination zweier Lichtschranken und eines dazwischen liegenden Impulsgebers oder eine Kombination aus 2 Impulsgebern und einer dazwischen liegenden Lichtschranke erforderlich.

Da das Umschalten der Impulsgeber in der laufenden Messung nicht unkritisch ist, wird die erste Variante stets bevorzugt. Das Rohr läuft in die Anlage ein, durchfährt die erste Lichtschranke, erreicht den Impulsgeber, der daraufhin angestellt wird, erreicht anschließend die zweite Lichtschranke. Das Belegen dieser Lichtschranke startet das Zählen der Impulsgeberpulse. Diese Pulse werden so lange gezählt, bis das Rohrende die erste Lichtschranke wieder frei gibt. Aus den gezählten Impulsen und dem Abstand der beiden Lichtschranken ergibt sich dann die gemessene Rohrlänge.

Je nach Rohrlänge lassen sich beim Durchlauf der Rohre durch die Anlage mehr oder weniger Kombinationen von zwei Lichtschranken und einem Impulsgeber finden, die eine Längenmessung ermöglichen. Am Beispiel eines 15 m Rohres ergeben sich entsprechend der Anzahl an Lichtschranken L... (6) und Impulsgebern IG... (11) **(Figur 3)** über 40 Möglichkeiten der Rohrlängenmessung.

Dargestellt sind in **Figur 3** die Kombination Lichtschranke - Impulsgeber - Lichtschranke, die vom Impulsgeber gemessene Messstrecke und die daraus resultierende Messabweichung. Um nur aussagekräftige Werte zu erfassen, wurden hier nur solche Kombinationen berücksichtigt, bei denen die Messstrecke der Impulsgeber größer als 1000 mm ist. Die beiden Grafiken dieser Maske zeigen auf der y-Achse die ermittelten Abweichungen aller möglichen Einzelmessungen von der beim Rohreinlauf errechneten Rohrlänge.

Auf der x-Achse sind die an einer Messung beteiligten Sensoren angegeben. Von links nach rechts sind dies die die Messung beendenden Lichtschranken LI0 - LU2, die möglichen Impulsgeber IG2 - IG10 und die die Messung startenden Lichtschranken LK1 - LK3. Bei jeder Messung sind drei Komponenten beteiligt. Die ermittelte Abweichung wird jeweils in das entsprechende Feld jeder der drei beteiligten Sensoren als Strich eingetragen. Liegt die Abweichung außerhalb des Toleranzbereiches, so wird dies durch einen Pfeil am oberen bzw. unteren Rand dargestellt.

Die untere Kurve wird nach jedem Rohrdurchlauf gelöscht, d. h. sie beinhaltet die Werte des letzten Rohres. Die obere Kurve wird nicht automatisch gelöscht, d. h. die Ergebnisse der Rohre werden hier aufsummiert, können jedoch jederzeit vom Bediener gelöscht werden.

Die Interpretation der gezeichneten Abweichungen ermöglicht ein einfaches und schnelles Erkennen defekter und/oder fehlerhaft kalibrierter Sensoren. Falsche Umrechnungsfaktoren für die Impulsgeber können ebenso erkannt werden wie falsche Lichtschrankenpositionen.

**Patentansprüche**

1. Verfahren zur Steuerung einer Produktionsanlage mit einer hochauflösenden Ortsverfolgung von Werkstücken, insbesondere von Rohren, bei dem im Zuge der Fertigung mittels an verschiedenen Positionen der Produktionsanlage angeordneten Positionssensoren mit dazwischen geschalteten Wegmesssensoren einerseits die aktuelle Position des Werkstückanfanges , Werkstückendes des durch die Anlage laufenden Werkstückes physikalisch durch die Sensoren bestimmt wird und andererseits an einer Stelle der Produktionsanlage mittels Kombination von mindestens zwei Positionssensoren und mindestens einem dazwischen geschalteten Wegmesssensor oder mindestens zwei Wegmesssensoren und mindestens einem dazwischen geschalteten Positionssensor eine Längenmessung des Werkstückes erfolgt und die ermittelten Messwerte zur aktuellen Position und Werkstücklänge einer Auswerteinheit zugeführt und anschließend zur Steuerung der Produktionsanlage verwendet werden
**dadurch gekennzeichnet,**
**dass** die physikalisch ermittelten Positionen an den verschiedenen Positionssensoren mit einer aus den gewonnenen Messdaten errechneten Soll-Position des Werkstückes verglichen werden und bei Überschreitung von Abweichungsgrenzwerten eine Anzeige und/oder ein Prüfabbruch und/oder ein Stillsetzen der Produktionanlage erfolgt.

2. Verfahren nach Anspruch 1
**dadurch gekennzeichnet,**
**dass** zur Erkennung von Langzeittrends die ermittelten Abweichungen für eine Vielzahl bereits durch die Produktionsanlage gelaufener Werkstücke erfasst und ausgewertet werden.

3. Verfahren nach Anspruch 1 und 2
**dadurch gekennzeichnet,**
**dass** die Längenmessung redundant mit den an mehreren Stellen der Produktionsanlage angeordneten Positionssensoren und Wegmesssensoren erfolgt und die ermittelten Messwerte mit Abweichungsgrenzwerten verglichen und die Abweichungen den an der Messung jeweils beteiligten Sensoren zugeordnet und daraus Rückschlüsse auf die jeweils fehlerhaft arbeitenden Sensoren gezogen werden.

4. Verfahren nach Anspruch 3
**dadurch gekennzeichnet,**
**dass** mittels der den Positionssensoren und/oder Wegmesssensoren zugeordneten Grenzwertüberschreitungen eine Stellgröße ermittelt wird, mittels derer eine Rekalibrierung der Sensoren erfolgt.

5. Verfahren nach Anspruch 4 **dadurch gekennzeichnet, dass** die Rekalibrierung automatisiert erfolgt.

6. Verfahren nach einem der Ansprüche 1 - 5 **dadurch gekennzeichnet, dass** die ermittelten Messwerte und Abweichungen von Grenzwerten einer optischen Anzeigeeinheit zugeführt werden.

7. Verfahren nach einem der Ansprüche 1 - 6 **dadurch gekennzeichnet, dass** als Positionssensor eine Lichtschranke und als Wegmesssensor ein Impulsgeber verwendet werden.

LS1　IG1　LS2　　IG2　　LS3　　　IG3　　　　　　　　　　　LSx　　IGy

**Figur 1a**: Prinzip der Ortsverfolgung beim Durchlauf eines Rohres durch die Prüfanlage (kurzes Rohr)

LS1　IG1　LS2　　IG2　　LS3　　　IG3　　　　　　　　　　　LSx　　IGy

**Figur 1b**: Prinzip der Ortsverfolgung beim Durchlauf eines Rohres durch die Prüfanlage (langes Rohr)

EP 2 583 764 A2

**Figur 2**: Darstellung der von den Lichtschranken erkannten Messfehler bei beim Durchlauf der Rohre durch die Prüfanlage

EP 2 583 764 A2

**Figur 3**: Darstellung der durch Auswertung von Messwertredundanz erkannten Messfehler beim Durchlauf der Rohre durch die Prüfanlage

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3010360 A1